# FASCICULE DE BREVET EUROPEEN

(11) **EP 0 571 518 B1**
(45) Date de publication et mention de la délivrance du brevet: **12.08.1998**
(21) Numéro de dépôt: 92906589.4
(22) Date de dépôt: 12.02.1992
(51) Int. Cl.: H04N 1/32

(54) **TELECOPIEUR A COMMUNICATIONS DIVERSES**
Multikommunikations-Faksimilegerät
FACSIMILE MACHINE WITH DIVERSE COMMUNICATION FACILITIES

(30) Priorité: 12.02.1991 FR 9101586
(43) Date de publication de la demande: 01.12.1993
(73) Titulaire: SOCIETE D'APPLICATIONS GENERALES D'ELECTRICITE ET DE MECANIQUE SAGEM, F-75783 Paris Cédex 16 (FR)
(72) Inventeur: CHARBONNIER, Philippe, F-78600 Maisons-Laffitte (FR)
(74) Mandataire: Bloch, Gérard
(86) Numéro de dépôt international: FR9200132
(87) Numéro de publication internationale: WO9214335

(56) Documents cités:
- EP-A- 409 718
- WO-A-90/04299
- FR-A- 2 642 925
- GB-A- 2 213 681
- US-A- 4 850 008

## Description

La présente invention concerne un télécopieur comprenant un modem, un processeur, un transformateur, des moyens de liaison d'une ligne téléphonique au modem par l'intermédiaire du transformateur, des moyens de liaison de la ligne à un poste téléphonique principal, un détecteur de sonneries, un module de reconnaissance de la nature d'appels entrants par au moins les fréquences des signaux reçus et une imprimante.

Les télécopieurs font aujourd'hui partie des équipements de bureau classiques, dont il est difficile de se passer. Leur utilisation dans un cadre domestique se développe d'ailleurs déjà. Parallèlement à ces appareils de télécopie, leurs usagers disposent d'autres équipements, comme des terminaux vidéotex, des répondeurs-enregistreurs téléphoniques, sans parler des nombreux postes téléphoniques quasiment indispensables.

Les télécopieurs classiques du type ci-dessus sont pourvus de moyens de reconnaissance de la nature d'appels entrants, leur permettant, en combinaison avec d'autres moyens de discriminer les transmissions télécopie des communications téléphonie et d'aiguiller la ligne téléphonique soit sur les organes de télécopie soit sur le poste téléphonique. Ces télécopieurs sont aussi dotés d'une imprimante leur pennettant, entre autres fonctions, d'assurer, en mode "copie locale", celle d'un équipement de photocopie.

Ces deux caractéristiques des télécopieurs ont donné l'idée à la demanderesse de vouloir leur associer, fonctionnellement, les équipements évoqués ci-dessus à titre de terminaux pour faire bénéficier ceux-ci de certains des moyens de ces télécopieurs.

La présente invention concerne un télécopieur selon la revendication 1. L'invention concerne également un télécopieur selon la revendication 2, ou selon la revendication 3.

Le télécopieur peut aussi être agencé pour inverser les vitesses de réception et d'émission d'un terminal vidéotex, c'est-à-dire commander le terminal en mode "opposé".

Quand un répondeur-enregistreur est associé au télécopieur, le télécopieur peut être agencé pour, en cas d'appel entrant, ne prendre la ligne téléphonique qu'après un nombre de sonneries supérieur à celui au terme duquel le répondeur-enregistreur connecte ses moyens d'enregistrement-lecture à la ligne téléphonique.

Le télécopieur peut encore être agencé pour, en association avec un poste téléphonique et un terminal vidéotex et un répondeur-enregistreur étant relié à la ligne téléphonique, aiguiller la ligne téléphonique sur le poste téléphonique et isoler le répondeur-enregistreur.

Quand un poste téléphonique secondaire est branché en parallèle sur la ligne téléphonique, en amont du télécopieur, le télécopieur peut être agencé pour, en cas d'appel entrant et de décrocher au poste secondaire parallèle, passer en intnision parallèle, à l'écoute des signaux du poste parallèle, et reconnaître leur nature.

On remarquera que EP-A-O 409 718 n'enseigne pas de moyens permettant au télécopieur de passer en intrusion parallèle. L'appareil de ce document, après arrivée d'un appel, commande directement la liaison de la partie télécopie à la ligne. En cas de demande de transmission graphique, il y a effectivement impression du document transmis. Sinon s'agissant alors d'un appel d'un serveur videotex ou d'un appel téléphonique, il y a tentative de liaison vidéotex. Sinon, il y a établissement de la liaison téléphonique.

Quant à FR-A-2 642 925, il n'enseigne pas d'avantage d'appareil se mettant en intrusion. Cet appareil prend complètement l'appel, tente de communiquer en télécopie et, après un certain délai, sonne le répondeur, de façon complètement isolée de la ligne, et lui passe la ligne quant il décroche. L'objectif est d'optimiser le délai par apprentissage du comportement du répondeur. La détection d'un intervalle de temps écoulé depuis un début de sonnerie ne s'apparente pas à des moyens d'intrusion parallèle.

L'invention sera mieux comprise à l'aide de la description suivante de la forme de réalisation préférée du télécopieur de l'invention, en référence au dessin annexé, sur lequel
- la figure 1 est une représentation schématique et structurelle du télécopieur associé à un terminal videotex, un répondeur-enregistreur et un poste téléphonique secondaire et parallèle et
- la figure 2 est un organigramme du fonctionnement du télécopieur de la figure 1.

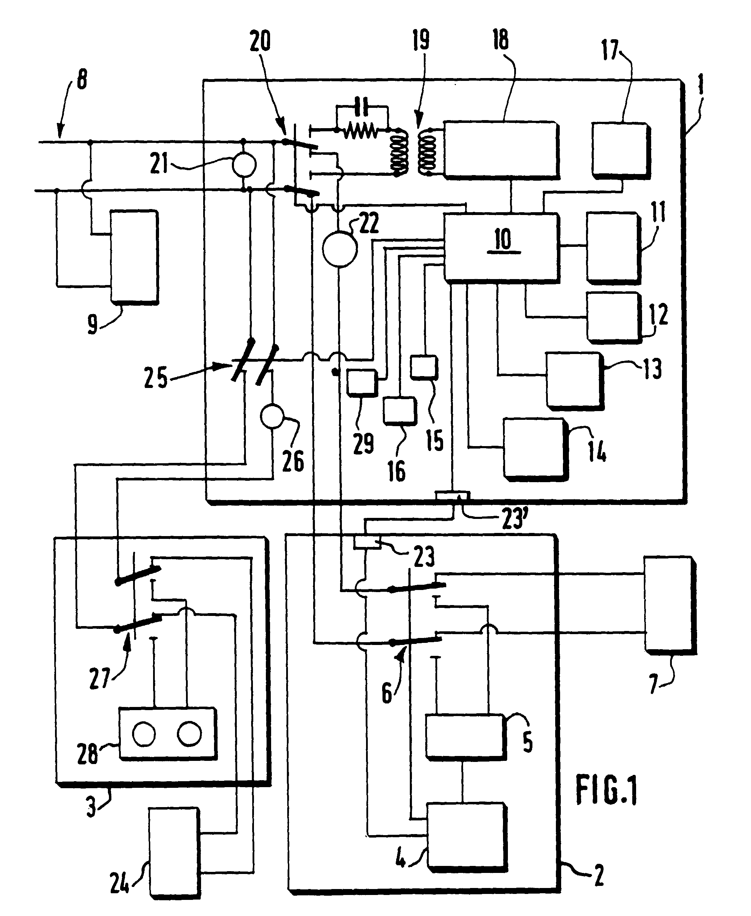

En référence à la figure 1, un télécopieur 1 de l'invention est ici associé à trois terminaux, un terminal videotex 2, en l'occurence de la marque déposée Minitel, bien connu de l'homme de métier, dans une version ordinaire sans imprimante, un répondeur-enregistreur 3, tout autant classique et répandu que le terminal 2, et un poste téléphonique secondaire parallèle 9. Le terminal 2 est agencé pour recevoir des "écrans" d'un centre serveur et les afficher. N'ont été représentés, sur la figure 1, comme éléments du terminal 2, que son processeur 4, son modem 5 et un commutateur 6 de liaison à un poste téléphonique principal 7.

Le télécopieur 1 est connecté à une ligne téléphonique 8 et au poste principal 7 par l'intermédiaire du terminal 2. Le poste téléphonique secondaire 9, branché en parallèle sur la ligne 8, en "amont" du télécopieur 1, selon un câblage conventionnel, partage la ligne avec le télécopieur 1 et le poste principal associé 7. L'ordre dans lequel ces appareils sont connectés pourrait d'ailleurs être différent, par exemple ligne 8, terminal 2, télécopieur 1, poste principal 7.

Le télécopieur 1 comporte un processeur central 10 relié à une mémoire 11, un module d'analyse, ou scanner, 12, un générateur de caractères 13, une imprimante 14, une touche "début" 15, une touche "stop" 16, un inverseur réponse manuelle-réponse automatique 29, un module 17, à filtres programmables, de reconnaissance de la nature des appels entrants, pour la mise en oeuvre de la fonction d'aiguillage téléphonie-télécopie et, plus généralement, de la fonction tri des appels entrants, un modem 18, branché aux bornes de l'enroulement secondaire d'un transformateur 19, et d'autres éléments classiques d'un télécopieur, non utiles pour la compréhension de l'invention et par conséquent non représentés.

Le module de reconnaissance 17 est agencé pour reconnaître la fréquence 1100 Hz des télécopieurs à numéroteur automatique, la fréquence 1300 Hz (hachée ou permanente) des serveurs videotex à appel automatique ainsi que l'absence de signaux vocaux. La ligne téléphonique 8 pénètre dans le télécopieur 1 et peut être dirigée, par un commutateur 20 commandé par le processeur 10, soit vers le modem 18 soit vers le terminal 2 et le poste associé 7. Un indicateur d'appel, ou détecteur de sonneries, 21 est branché en parallèle sur la ligne 8, en "amont" du commutateur 20, et un détecteur de courant 22, qui peut être connecté en série avec le terminal 2 et le poste 7, entre ceux-ci et le commutateur 20, permet de déterminer si le poste 7 est en ligne ou au repos.

Le processeur 4 du terminal 2, par une prise peri-informatique 23 du terminal 2 et une prise peri-informatique 23' du télécopieur 1, est relié au processeur 10 du télécopieur 1. Le répondeur-enregistreur 3, auquel est ici aussi associé un poste téléphonique 24, peut être branché sur la ligne 8, en "amont" du commutateur 20 et, ici, en aval du détecteur 21, par l'intermédiaire d'un commutateur 25 et d'un second détecteur de courant 26, entre le commutateur 25 et le répondeur-enregistreur 3. Un commutateur 27, dans le répondeur-enregistreur 3, permet de connecter la ligne soit sur un organe d'enregistrement-lecture 28, symbolisé sur la figure 1 par une cassette, par simplicité, soit sur le poste 24. A l'état de repos, le commutateur 20 est dans la position de la figure 1 qui connecte la ligne 8 au terminal 2 et le commutateur 25, dans la position, toujours de la figure 1, qui connecte la ligne 8 au répondeur-enregistreur 3.

Le télécopieur 1 est agencé pour trier les appels entrants.

Lorsque l'usager du télécopieur 1 est présent, par actionnement de l'inverseur 29, il bascule 30 le télécopieur 1 en réponse manuelle pour l'isoler : le commutateur 20 reste dans sa position de repos et le commutateur 25 est activé pour isoler aussi le répondeur 3. Dans cet état, ni le télécopieur 1 ni le répondeur 3 ne peuvent répondre aux appels entrants. On notera que les répondeurs-enregistreurs sont pourvus d'une commande de basculement réponse manuelle/réponse automatique. Mais ici, les commandes de basculement des deux appareils 1 et 3 sont avantageusement regroupées en une seule sur le télécopieur. Dans cet état encore, les postes central 7 et parallèle 9 peuvent être utilisés de façon tout-à-fait normale.

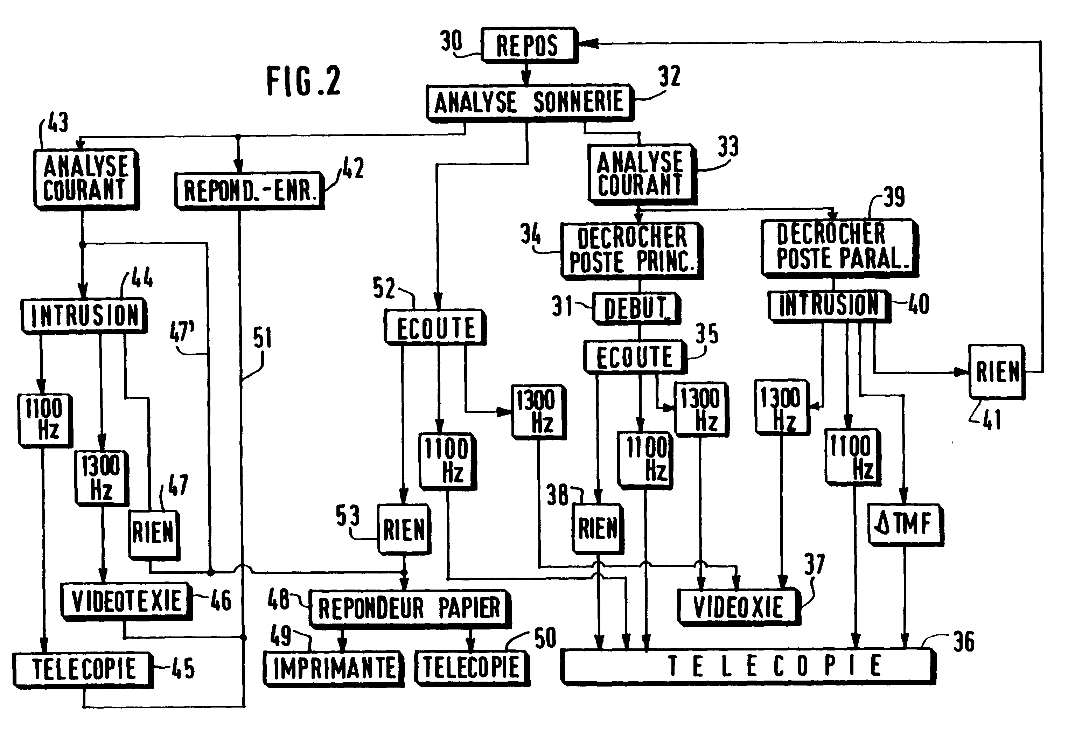

En référence à l'organigramme de la figure 2, si l'appel entrant est un appel non téléphonique, ou non vocal, et que l'usager a décroché le combiné du poste principal 7, il actionne 31 la touche "début" 15, le commutateur 20 passant en position active qui connecte la ligne 8 au modem 18. Auparavant, par l'analyse de sonnerie 32, par le détecteur 21, et l'analyse de courant 33, par le détecteur 22, le décrocher du poste principal 7 a été saisi 34 par le télécopieur (processeur 10). Le télécopieur reste en écoute 35 quelques instants, ici 5 secondes, et détermine la nature de l'appel. Il peut provenir d'un télécopieur à numéroteur automatique ou d'un serveur videotex à appel automatique.

Dans le premier cas, la fréquence 1100 Hz ayant été détectée par le module de reconnaissance 17, le processeur 10 est agencé pour que le télécopieur poursuive en télécopie 36 : le commutateur 20 reste en position active et le protocole normalisé T 30, qui régit les échanges entre télécopieurs, est mis en oeuvre.

Dans le second cas, la fréquence 1300 Hz ayant été détectée par le module 17, le processeur 10 fait basculer le commutateur 20 en position de repos après avoir, par la prise peri-informatique 23 et le processeur 4, fait basculer le commutateur 6 du terminal 2 dans la position reliant la ligne 8 au modem 5. Le télécopieur poursuit ainsi, et par analogie avec les termes téléphonie et télécopie, dans un mode qu'on peut désigner par le neologisme "videotexie" 37. Le terminal 2 est en communication sur la ligne 8 et le télécopieur 1 observe le flot des informations par les prises peri-informatiques 23 et 23', à la recherche d'éventuelles applications de haut niveau pouvant le concerner, comme par exemple une impression d'écran ou un transfert graphique.

Dans un troisième cas 38, aucune fréquence particulière n'a été détectée au bout de 5 secondes et le télécopieur poursuit aussi en télécopie 36.

Si l'appel entrant est non vocal et que l'usager a décroché 39 le combiné du poste parallèle 9, par l'analyse de sonnerie 32 (la sonnerie disparait) et l'analyse de courant 33 (le détecteur 22 n'est pas activé), le décrocher du poste parallèle 9 a été saisi par le processeur 10 du télécopieur. Le télécopieur passe en intrusion parallèle 40, par basculement du commutateur 20 en position active, à l'écoute des signaux du poste parallèle 9 dont il détermine la nature. Il peut s'agir de signaux télématiques et de signaux de télécommande DTMF (dual tone multifrequency) émis par l'usager à partir d'une touche du poste parallèle 9 et reconnaissables par les filtres du module de reconnaissance 17.

L'usager n'a plus ensuite qu'à raccrocher le combiné du poste parallèle 9 avant que le télécopieur ne poursuive dans l'application reconnue.

En cas de détection d'une fréquence de 1100 Hz, le télécopieur poursuit en télécopie 36; en cas de détection d'une fréquence de 1300 Hz, il poursuit en videotexie 37; dans le cas d'un signal DTMF, le télécopieur peut poursuivre en télécopie 36. Si aucun des signaux précédents n'a été détecté 41 au bout, par exemple, de 15 secondes, le commutateur 20, dans l'exemple considéré, est basculé en position repos 30, le télécopieur considérant que le poste parallèle 9 reste en conversation vocale sur la ligne.

Ont jusqu'ici été abordées les fonctions du télécopieur assurant le tri parmi des signaux de nature vocale, télécopie ou télématique.

Lorsque l'usager du télécopieur 1 est absent, au moyen de l'inverseur 29, il bascule le télécopieur en réponse automatique, avec, pour effet, de mettre le commutateur 25 en position de repos et de liaison avec le répondeur-enregistreur 3, le commutateur 20 étant en position de repos 30.

Le répondeur-enregistreur 3, de structure classique, comporte un détecteur d'appel, non représenté, permettant, lorsque l'usager n'a pas décroché au bout de m sonneries, de faire basculer le commutateur 27 sur l'organe d'enregistrement-lecture 28.

Le télécopieur 1, à la mise en service, est réglé pour, en cas d'appel entrant, ne répondre, c'est-à-dire ne prendre l'appel, qu'au bout de n sonneries, n étant supérieur à m. Lorsque le répondeur-enregistreur 3 est en marche et qu'au bout de m sonneries, par un message classique, il accueille l'appel entrant 42, cette situation est détectée par le processeur 10 du télécopieur 1, par un nombre de sonneries inférieur à n 32 et l'activation 43 du détecteur de courant 26, le télécopieur 1 passe en intrusion parallèle 44, par basculement du commutateur 20 en position active, à l'écoute des signaux du répondeur-enregistreur 3.

Dans le cas d'un message vocal, celui-ci est saisi 42 sur l'organe d'enregistrement 28 du répondeur-enregistreur 3.

En cas de détection d'une fréquence de 1100 Hz, le télécopieur poursuit en télécopie 45, le commutateur 20 restant en position active; en cas de détection d'une fréquence de 1300 Hz, il poursuit en videotexie 46, par rebasculement du commutateur 20 en position de repos et commande appropriée du terminal videotex 2 par les prises péri-informatiques. Dans les deux cas, le processeur 10 du télécopieur rebascule le commutateur 25 en position active pour isoler 51 le répondeur-enregistreur 3 qui retournera de lui-même en position de repos peu après. Lorsque l'appelant n'émet aucun message vocal 47 ou qu'un message vocal a bien été saisi par le répondeur-enregistreur 3 qui a raccroché et dont la séquence a pris fin 47', cette situation est saisie par le télécopieur, après un silence ici de 8 secondes environ ou par le relachement du détecteur 26, et le télécopieur peut tenter de mettre en oeuvre 48 un mode d'exploitation dit "répondeur papier".

Le terminal videotex 2, dans sa liaison avec la ligne téléphonique 8, reçoit normalement les informations du serveur à une vitesse rapide (1200 bauds) et émet les siennes à une vitesse lente (75 bauds). Le processeur 4 du terminal 2 est agencé pour inverser les vitesses de réception et d'émission du terminal : en "mode opposé", l'émission d'informations par le terminal 2 s'effectue à vitesse rapide, la réception d'informations, à vitesse lente.

La fréquence porteuse de la voie rapide du terminal 2 est ici 1300 Hz, celle de la voie lente, 390 Hz. Le protocole T 30 évoqué ci-dessus définit notamment des trames normalisées et en particulier une trame DIS (digital identification signal) qui permet à un télécopieur appelé d'annoncer ses capacités normalisées (caractéristiques de son modem, codage, vitesse, format, capacité d'être relevé, ...). Lors donc de la tentative de mise en oeuvre du mode "répondeur papier", par l'intermédiaire de la prise peri-informatique 23 du terminal 2, le télécopieur 1, dont le commutateur 20 était toujours en position active d'intrusion, commande la connexion du terminal 2 en "mode opposé" et le basculement du commutateur 20 en position de repos et de liaison avec le terminal 2 et attend la porteuse retour, par conséquent à 390 Hz.

En cas de réception de cette porteuse retour dans un laps de temps ici de 12 secondes, le message est saisi 49 sur l'imprimante 14 du télécopieur 1 par l'intermédiaire du terminal 2 et de la prise peri-informatique 23, d'où la désignation de "répondeur papier" de cette application. Si la porteuse retour ne "converge" pas au bout du laps de temps considéré, le télécopieur entreprend 50 une dernière tentative de mettre en oeuvre le mode télécopie, bascule le commutateur 20 en position active et émet des trames DIS pendant ici 35 secondes.

La tentative répondeur-papier 48 n'est pas obligatoire et, lorsque l'appelant n'émet aucun message vocal 47, le télécopieur entreprend directement une dernière tentative du mode télécopie. Une chance a donc été donnée à toutes les applications, y compris, en dernier lieu, à la télécopie à appel manuel sans fréquence de 1100 Hz des télécopieurs à numéroteur automatique. La première a été donnée au répondeur-enregistreur 3, la seconde et la troisième à la réception d'un message d'un télécopieur à numéroteur automatique (1100 Hz) ou d'un serveur videotex (1300 Hz), la quatrième, au répondeur papier et la cinquième, à la réception d'un message d'un télécopieur à appel manuel.

Au plan opératoire, toujours dans le cas où le répondeur-enregistreur est en marche et qu'il accueille un appel entrant au bout de m sonneries, le message d'accueil du répondeur-enregistreur 3 invite l'appelant à laisser un message parlé, une télécopie, en lançant son télécopieur, ou un message videotex, en appuyant sur la touche connexion de son terminal.

En cas de message parlé enregistré sur le répondeur-enregistreur 3, après que l'appelant ait raccroché, et sans qu'il n'en sache rien, des tentatives de répondeur papier et de télécopie seront effectuées.

Si l'appelant est équipé d'un terminal videotex, après le message d'accueil, il pourra appuyer sur la touche connexion de son terminal, en recherche de la fréquence porteuse à 1300 Hz, ce qui crée le silence de 8 secondes au terme duquel le télécopieur 1 lance le mode répondeur-papier.

Si l'appelant est l'usager d'un télécopieur, il lance son télécopieur en mode télécopie, dont la mise en oeuvre sera retardée par la tentative de répondeur papier du télécopieur appelé 1 mais sera quand même effectuée avant le chien de garde de son télécopieur, qui est une temporisation normalisée.

Quant aux appels automatiques, caractérisés par une fréquence de 1100 ou 1300 Hz, ils sont immédiatement détectés par le module de reconnaissance 17, le télécopieur 1 étant en intrusion parallèle, et aiguillés en conséquence.

S'il ne s'est rien passé au bout de n sonneries, cela signifie qu'il n'y a pas de répondeur ou qu'il y en a un mais qu'il est indisponible ou éteint. Dans ce cas, le télécopieur 1 prend l'appel par basculement du commutateur 20 en position active et procède à une écoute silencieuse 52 ici pendant 5 secondes. En cas de détection d'une fréquence de 1100 Hz, le télécopieur 1 poursuit en télécopie 36; en cas de détection d'une fréquence de 1300 Hz, il poursuit en videotexie 37, par rebasculement du commutateur 20 en position de repos. Si au bout de 5 secondes, aucun signal n'a été détecté 53, le télécopieur 1 fait une tentative de répondeur papier 48, comme dans le cas de l'émission d'un message d'accueil par le répondeur-enregistreur 3.

Si, bien que l'installation soit en mode réponse automatique, l'usager rentre et décroche avant que le répondeur-enregistreur ou le télécopieur ne l'ait fait (m ou n sonneries), le télécopieur 1 se comporte comme en réponse manuelle. S'il ne s'agit pas d'un appel téléphonique et qu'il a décroché le combiné du poste principal 7, il peut "rendre la main" en actionnant la touche début 15. S'il a décroché le combiné du poste parallèle 9, il peut rendre la main au télécopieur 1 en laissant passer les signaux télématiques ou en actionnant la touche de télécommande DTMF puis en raccrochant.

Les répondeurs-enregistreurs du commerce permettent généralement l'écoute sur haut-parleur et la reprise de la communication par l'usager sur le poste associé (24), reprise qui est détectée par l'appareil et provoque son retour au repos. Avec le télécopieur qui vient d'être décrit, cette possibilité existe aussi; mais on peut faire l'économie du poste associé 24. A cet effet, on prévoit d'effectuer la reprise de la communication sur le poste principal 7 tout en actionnant la touche stop 16 du télécopieur 1. Celui-ci quitte alors l'état d'intrusion parallèle dans lequel il se trouvait, avec basculement du commutateur 20 en position de repos, activation du détecteur de courant 22, et, le temps de la communication, activation du commutateur 25 pour isoler le répondeur-enregistreur 3 qui se met ensuite à l'état de repos.

Les intrusions parallèles 40 et 44 ont été décrites comme une connexion du télécopieur à la ligne par activation du commutateur 20. Ceci est possible mais présente le léger inconvénient d'atténuer légèrement les signaux de parole et de dériver une partie du courant de ligne. Une intrusion en haute impédance évite cet inconvénient ; elle peut s'effectuer, par exemple, en actionnant dans les états 40 et 44 non seulement le commutateur 20 mais également deux autres, non représentés, l'un coupant le chemin du courant de ligne, en coupant la résistance 60 située entre le transformateur 19 et le commutateur 20, l'autre commutant la résistance d'adaptation du modem 18 de la valeur normale à une valeur élevée.

En ce qui concerne les appels sortants, chacun des appareils de l'association peut prendre à volonté la ligne 8 si elle est libre. Le terminal videotex 2 peut l'obtenir sauf si le télécopieur 1 est en ligne, le commutateur 20 en position active. Le télécopieur 1 s'abstient de procéder à des appels automatiques si les détecteurs 22, 26 sont activés. Lorsque le télécopieur 1 tente un appel sortant, il s'assure de la présence de la tonalité d'invitation à numéroter et, s'il ne l'a pas, raccroche rapidement, le poste parallèle 9 pouvant par exemple être en ligne. Le poste 24, ici associé au répondeur-enregistreur 3, peut prendre la ligne si le télécopieur 1 ne l'a pas; il en résulte normalement un arrêt de la fonction enregistrement-lecture 28, en cas d'enregistrement. Le poste parallèle 9 peut prendre la ligne à tout instant mais l'usager devra déceler de lui-même une communication de données en cours pour raccrocher rapidement.

On a décrit diverses circonstances où était tentée l'application répondeur papier, en liaison étroite avec une tentative subséquente en télécopie. On peut évidemment en déduire des configurations restreintes où
- soit le répondeur papier ne serait pas offert ; on enchaînerait donc directement en tentative télécopie,
- soit la télécopie ne serait pas offerte à ce stade.

Vont maintenant être décrits plus en détail le répondeur papier ainsi qu'une autre application intéressante rendue possible par l'association avec le terminal videotex : l'éditeur de télécopie.

Soit donc les télécopieur 1 et terminal videotex 2 de la figure 1. Lorsque l'usager est absent et qu'un appel entrant arrive sur la ligne 8, le télécopieur 1 le prend et détermine s'il est destiné à une application qu'il sait reconnaitre. Dans le cas contraire, l'appel entrant ayant été émis par un terminal videotex, le télécopieur 1 procède à une tentative de répondeur papier. A cet effet, il commande, d'une part, le basculement du commutateur 20 en position de repos et, d'autre part, par les prises peri-informatiques 23', 23, la prise de ligne par le terminal videotex 2 et l'inversion de ses vitesses d'émission et de réception.

Toujours par les prises 23', 23, le télécopieur commande au terminal videotex de se comporter en serveur en émettant en ligne un écran d'accueil fourni par le télécopieur. L'usager appelant, détectant la porteuse de la voie rapide du terminal 2, connecte son propre terminal videotex, reçoit l'écran d'accueil du terminal 2 qui l'invite à taper un message sur le clavier de son terminal videotex. Le terminal videotex 2 reçoit ce message qui, par les prises 23, 23', est recueilli par le télécopieur 1. Grâce au générateur de caractères 13, qui fournit une image de ce message, celui-ci est imprimé sur l'imprimante 14 du télécopieur 1. Dans cette application, le télécopieur assure une fonction de répondeur-enregistreur télématique que l'usager, à son retour, peut consulter directement sans aucune manipulation.

L'association du télécopieur 1 et du terminal videotex 2 rend également possible l'application éditeur de télécopie. Sous contrôle du processeur 10, par les prises 23, 23', l'usager, à l'aide du clavier et de l'écran du terminal 2, peut saisir un message sur le terminal 2, message qui est mémorisé par le télécopieur avant d'être converti en éléments d'image (pixels) et transmis en télécopie à un correspondant usager d'un autre télécopieur. Dans cette application, l'usager n'utilise du terminal videotex que son écran et son clavier, l'ensemble télécopieur et terminal étant exploité en traitement de texte.

Le télécopieur, qui vient d'être décrit dans toutes ses applications, est un télécopieur multifonctionnel.

On a décrit un télécopieur intégré dans une chaîne ligne téléphonique-télécopieur-terminal videotex-poste téléphonique. Ces appareils pourraient tout aussi bien être intégrés différemment, par exemple dans une chaîne ligne téléphonique-terminal videotex-télécopieur-poste téléphonique.

## Revendications

1. Télécopieur comprenant un modem (18), un processeur (10), un transformateur (19), des moyens (20) de liaison d'une ligne téléphonique (8) au modem (18) par l'intermédiaire du transformateur (19), des moyens (20, 22) de liaison de la ligne (8), à un poste téléphonique principal (7) et à un terminal vidéotex (2) pourvu d'une prise périinformatique (23), une prise périinformatique (23'), reliée au processeur (10), de liaison directe à la prise périinformatique (23) du terminal vidéotex (2), des moyens (25,26) de liaison de la ligne (8) à un répondeur-enregistreur (3), un détecteur de sonneries (21), un module (17) de reconnaissance de la nature d'appels entrants par au moins les fréquences des signaux reçus et une imprimante (14), télécopieur caractérisé par le fait qu'il est agencé pour, en cas de liaison entre la ligne (8) et le répondeur-enregistreur (3), saisir par le modem (18) et le transformateur (19), en parallèle sur le répondeur-enregistreur (3), des évènements sur la ligne et donc reconnaître leur nature et n'aiguiller la ligne (8), en fonction de la nature des événements, que sur le télécopieur, ou sur le terminal vidéotex (2) ou sur le répondeur-enregistreur (3), et, en cas de liaison entre la ligne (8) et le terminal vidéotex (2), saisir par la prise périinformatique (23), des évènements sur la ligne et donc reconnaître leur nature et n'aiguiller la ligne (8), en fonction de la nature des événements, que sur le télécopieur ou sur le terminal vidéotex (2).

2. Télécopieur comprenant un modem (18), un processeur (10), un transformateur (19), des moyens (20) de liaison d'une ligne téléphonique (8) au modem (18) par l'intermédiaire du transformateur (19), des moyens (20, 22) de liaison de la ligne (8) à un poste téléphonique principal (7), des moyens (25, 26) de liaison de la ligne (8) à un répondeur-enregistreur (3), un détecteur de sonneries (21), un module (17) de reconnaissance de la nature d'appels entrants par au moins les fréquences des signaux reçus et une imprimante (14), télécopieur caractérisé par le fait qu'il est agencé pour, après un appel entrant ayant provoqué la liaison entre le ligne (8) et le répondeur-enregistreur (3), saisir par le modem (18) et le transformateur (19), en parallèle sur le répondeur-enregistreur (3), des événements sur la ligne et donc reconnaître leur nature et, en fonction de la nature des évènements, ne maintenir la liaison de la ligne (8) qu'avec le télécopieur ou le répondeur-enregistreur (3).

3. Télécopieur comprenant un modem (18), un processeur (10), un transformateur (19), des moyens (20) de liaison d'une ligne téléphonique (8) au modem (18) par l'intermédiaire du transformateur (19), des moyens (20, 22) de liaison de la ligne (8), à un poste téléphonique principal (7) et à un terminal vidéotex (2) pourvu d'une prise périinformatique (23), une prise périinformatique (23'), relié au processeur (10), de liaison directe à la prise périinformatique (23) du terminal vidéotex (2), un détecteur de sonnenes (21), un module (17) de reconnaissance de la nature d'appels entrants par au moins les fréquences des signaux reçus et une imprimante (14), télécopieur caractérisé par le fait qu'il est agencé pour, en cas de liaison entre la ligne (8) et le terminal vidéotex (2), saisir par la prise périinformatique (23'), des évènements sur la ligne et donc reconnaître leur nature et n'aiguiller la ligne (8), en fonction de la nature des événements que sur le télécopieur ou sur le terminal vidéotex (2).

4. Télécopieur selon l'une des revendications 1 et 3, dans lequel il est prévu des moyens (10) agencés pour inverser les vitesses d'émission et de réception du terminal vidéotex (2).

5. Télécopieur selon lune des revendications 1 à 5, dans lequel les moyens de liaison au poste téléphonique principal (7) comprennent un premier détecteur de courant (22) relié aux moyens (20) de liaison du modem (18) à la ligne téléphonique (8) et détectant le courant de ligne dans le poste téléphonique principal (7).

6. Télécopieur selon l'une des revendications 1 à 5, agencé pour, un poste téléphonique secondaire (9) étant branché en parallèle sur la ligne téléphonique (8), passer, en cas d'appel entrant et de décrocher au poste secondaire (9), en intnision parallèle à l'écoute des signaux du poste secondaire (9) et reconnaître leur nature.

7. Télécopieur selon l'une des revendications 1 et 2, dans lequel lesdits moyens de liaison de la ligne (8) au répondeur-enregistreur (3) comprennent un commutateur (25), branché sur la ligne téléphonique (8) en amont des moyens (20) de liaison du modem (18) et du poste téléphonique principal (7) à la ligne (8), et un second détecteur de courant (26) détectant le courant de ligne dans le répondeur-enregistreur (3).

8. Télécopieur selon l'une des revendications 1, 2 et 7, agencé pour, le répondeur-enregistreur (3) comportant un organe d'enregistrement-lecture (28), ne se relier à la ligne téléphonique (8) en cas d'appel entrant, qu'après un nombre de sonneries supérieur à celui du terme duquel l'organe (28) est relié à la ligne téléphonique (8).

9. Télécopieur selon l'une des revendications 7 et 8, dans lequel le processeur (10) est agencé pour commander le commutateur (25) pour que ce dernier isole le répondeur-enregistreur (3) de la ligne téléphonique (8).

10. Ensemble comprenant un télécopieur, selon l'une des revendications 1, 2, 7, 8, 9, un poste téléphonique principal (7) et un répondeur-enregistreur (3), ce dernier étant relié à la ligne téléphonique (8), le télécopieur comprenant des moyens (10, 20, 25) agencés pour aiguiller la ligne téléphonique (8) sur le poste téléphonique principal (7) et isoler le répondeur-enregistreur (3).

11. Ensemble comprenant un télécopieur, selon la revendication 4, et un terminal videotex (2) relié au télécopieur, ce dernier étant agencé pour, en cas de liaison entre le modem (18) du télécopieur et la ligne téléphonique (8) et de silence sur celle-ci, commander l'aiguillage de la ligne téléphonique (8) sur le terminal videotex (2) et l'inversion des vitesses d'émission et de réception du terminal vidéotex (2) pour pouvoir saisir un message sur l'imprimante (14) par l'intermédiaire de la prise périinformatique (23') de liaison directe entre le télécopieur et le terminal videotex (2).

12. Ensemble selon la revendication 11, dans lequel le télécopieur est agencé pour fournir au terminal vidéotex (2) un message et lui commander de l'émettre en ligne.

13. Télécopieur selon l'une des revendications 1 et 3, agencé pour permettre la saisie et l'édition d'un texte sur le terminal videotex (2), le convertir en éléments d'image et l'imprimer ou le transmettre en télécopie.

14. Ensemble comprenant un télécopieur, selon la revendication 4, un terminal videotex (2), relié au télécopieur, et un répondeur enregistreur (3), le télécopieur étant agencé pour, en cas de liaison entre le répondeur-enregistreur (3) et la ligne téléphonique (8) et de silence sur celle-ci ou de raccrocher du répondeur-enregistreur (3), commander l'aiguillage de la ligne téléphonique (8) sur le terminal videotex (2) et l'inversion des vitesses d'émission et de réception du terminal videotex (2) pour pouvoir saisir un message sur l'imprimante (14) par l'intermédiaire de la prise périinformatique (23') de liaison directe entre le télécopieur et le terminal videotex (2).

## Patentansprüche

1. Fernkopierer mit einem Modem (18), einem Prozessor (10), einem Transformator (19), Mitteln (20) zur Verbindung einer Telefonleitung (8) mit dem Modem (18) unter Zwischenschaltung des Transformators (19), Mitteln (20, 22) zur Verbindung der Leitung (8) mit einem Haupttelefongerät (7) und einem Videotex-Terminal (2), das mit einem Daten-Peripherieanschluß (23) versehen ist, einem Daten-Peripherieanschluß (23'), der mit dem Prozessor (10) verbunden ist, zur unmittelbaren Verbindung mit dem Daten-Peripherieanschluß (23) des Videotex -Terminals (2), Mitteln (25, 26) zur Verbindung der Leitung (8) mit einem Anrufbeantworter (3), einem Klingeldetektor (21), einem Modul (17) zum Erkennen der Art von eingehenden Anrufen durch zumindest die Frequenzen der erhaltenen Signale, und einem Drucker (14), wobei der Fernkopierer dadurch gekennzeichnet ist, daß er dafür eingerichtet ist, um im Fall einer Verbindung zwischen der Leitung (8) und dem Anrufbeantworter (3), durch das Modem (18) und den Transformator (19), parallel zum Anrufbeantworter (3), Vorgänge auf der Leitung zu erfassen und damit deren Art zu erkennen und die Leitung (8) in Abhängigkeit von der Art der Vorgänge nur auf den Fernkopierer oder auf das Videotex-Terminal (2) oder auf den Anrufbeantworter (3) zu schalten, und im Fall einer Verbindung zwischen der Leitung (8) und dem Videotex-Terminal (2), durch den Daten-Peripherieanschluß (23) Vorgänge auf der Leitung zu erfassen und damit ihre Art zu erkennen und die Leitung (8) in Abhängigkeit von der Art der Vorgänge nur auf den Fernkopierer oder auf das Videotex-Terminal (2) zu schalten.

2. Fernkopierer mit einem Modem (18), einem Prozessor (10), einem Transformator (19), Mitteln (20) zur Verbindung einer Telefonleitung (8) mit dem Modem (18) unter Zwischenschaltung des Transformators (19), Mitteln (20, 22) zur Verbindung der Leitung (8) mit einem Haupttelefongerät (7), Mitteln (25, 26) zur Verbindung der Leitung (8) mit einem Anrufbeantworter (3), einem Klingeldetektor (21), einem Modul (17) zum Erkennen der Art von eingehenden Anrufen durch zumindest die Frequenzen der erhaltenen Signale, und einem Drucker (14), wobei der Fernkopierer dadurch gekennzeichnet ist, daß er dafür eingerichtet ist, um, nachdem ein eingehender Anruf die Verbindung zwischen der Leitung (8) und dem Anrufbeantworter (3) hergestellt hat, durch das Modem (18) und den Transformator (19), parallel zum Anrufbeantworter (3), Vorgänge auf der Leitung zu erfassen und damit deren Art zu erkennen, und in Abhängigkeit der Art der Vorgänge die Verbindung der Leitung (8) nur mit dem Fernkopierer oder dem Anrufbeantworter (3) beizubehalten.

3. Fernkopierer mit einem Modem (18), einem Prozessor (10), einem Transformator (19), Mitteln (20) zur Verbindung einer Telefonleitung (8) mit dem Modem (18) unter Zwischenschaltung des Transformators (19), Mitteln (20, 22) zur Verbindung der Leitung (8) mit einem Haupttelefongerät (7) und einem Videotex-Terminal (2), das mit einem Daten-Peripherieanschluß (23) versehen ist, einem Daten-Peripherieanschluß (23'), der mit dem Prozessor (10) verbunden ist, zur unmittelbaren Verbindung mit dem Daten-Peripherieanschluß (23) des Videotex-Terminals (2), einem Klingeldetektor (21), einem Modul (17) zum Erkennen der Art von eingehenden Anruten durch zumindest die Frequenzen der erhaltenen Signale, und einem Drucker (14), wobei der Fernkopierer dadurch gekennzeichnet ist, daß er dafür eingerichtet ist, um im Fall einer Verbindung zwischen der Leitung (8) und dem Videotex Terminal (2) durch den Daten-Peripherieanschluß (23') Vorgänge auf der Leitung zu erfassen und damit ihre Art zu erkennen und die Leitung (8), in Abhängigkeit der Art der Vorgänge se, nur auf den Fernkopierer oder auf das Videotex-Terminal (2) zu schalten.

4. Fernkopierer nach einem der Ansprüche 1 bis 3, dadurch gekennzeichnet, daß Mittel (10) vorgesehen sind, die dafür eingerichtet sind, die Geschwindigkeiten der Sendung und des Empfangs des Videotex-Terminals (2) umzukehren.

5. Fernkopierer nach einem der Ansprüche 1 bis 4, dadurch gekennzeichnet, daß die Mittel zur Verbindung mit dem Haupttelefongerät (7) einen ersten Stromdetektor (22) umfassen, der mit den Mitteln (20) zur Verbindung des Modems (18) mit der Telefonleitung (8) verbunden ist und den Leitungsstrom im Haupttelefongerät (7) erfaßt.

6. Fernkopierer nach einem der Ansprüche 1 bis 5, der dafür eingerichtet ist, wobei ein Zweittelefongerät (9) parallel zur Telefonleitung (8) geschaltet ist, im Fall eines eingehenden Anrufs und beim Abheben des Zweitgeräts (9) zum parallelen Mithören der Signale des Zweitgeräts (9) und zum Erkennen von deren Art überzugehen.

7. Fernkopierer nach Anspruch 1 oder 2, dadurch gekennzeichnet, daß die Mittel zur Verbindung der Leitung (8) mit dem Anrufbeantworter (3) einen Umschalter (25) umfassen, der auf die Telefonleitung (8) stromaufwärts der Mittel (20) zur Verbindung des Modems (18) und des Haupttelefongeräts (7) mit der Leitung (8) geschaltet ist, und einen zweiten Stromdetektor (26), der den Leitungsstrom im Anrufbeantworter (3) erfaßt.

8. Fernkopierer nach einem der Ansprüche 1, 2 oder 7, der dafür eingerichtet ist, wobei der Anrufbeantworter (3) ein Aufnahme- und Wiedergabeorgan (28) aufweist, sich im Falle eines eingehenden Anrufs erst nach einer Anzahl von Klingelsignalen mit der Telefonleitung (8) zu verbinden, die größer ist als die, nach der das Organ (28) mit der Telefonleitung (8) verbunden wird.

9. Fernkopierer nach einem der Ansprüche 7 und 8, dadurch gekennzeichnet, daß der Prozessor (10) dafür eingerichtet ist, den Umschalter (25) zu steuern, damit dieser den Anrufbeantworter (3) von der Telefonleitung (8) trennt.

10. Einheit mit einem Fernkopierer nach einem der Ansprüche 1, 2, 7, 8 oder 9, einem Haupttelefongerät (7) und einem Anrufbeantworter (3), welch letzterer mit der Telefonleitung (8) verbunden ist, wobei der Fernkopierer Mittel (10, 20, 25) aufweist, die dafür eingerichtet sind, die Telefonleitung (8) auf das Haupttelefongerärt (7) zu schalten und den Anrufbeantworter (3) abzutrennen.

11. Einheit mit einem Fernkopierer nach Anspruch 4 und einem an den Fernkopierer angeschlossenen Videotex-Terminal (2), welch letzteres dafür eingerichtet ist, im Fall einer Verbindung zwischen dem Modem (18) des Fernkopierers und der Telefonleitung (8) und eines Schweigens auf dieser, die Schaltung der Telefonleitung (8) auf das Videotex-Terminal (2) und die Umkehrung der Sende- und Empfangsgeschwindigkeiten des Videotex-Terminals (2) zu steuern, um eine Nachricht auf dem Drucker (14) unter Zwischenschaltung des Daten-Peripherieanchlusses (23') zur unmittelbaren Verbindung zwischen dem Fernkopierer und dem Videotex-Terminal (2) erfassen zu können.

12. Einheit nach Anspruch 11, dadurch gekennzeichnet, daß der Fernkopierer dafür eingerichtet ist, um eine Nachricht an das Videotex -Terminal (2) abzugeben und dieses anzuweisen, sie on-line auszusenden.

13. Fernkopierer nach einem der Ansprüche 1 bis 3, der dafür eingerichtet ist um die Erfassung und die Aufgabe eines Textes auf dem Videotex-Terminal (2) zu ermöglichen, ihn in Bildelemente umzuwandeln und ihn auszudrucken oder als Fernkopie zu übertragen.

14. Einheit mit einem Fernkopierer nach Anspruch 4, einem mit dem Fernkopierer verbundenen Videotex-Terminal (2) und einem Anrufbeantworter (3), wobei der Fernkopierer dafür eingerichtet ist, um im Fall einer Verbindung zwischen dem Anrufbeantworter (3) und der Telefonleitung (8) und eines Schweigens auf dieser oder beim Auflegen des Anrufbeantworters (3), die Schaltung der Telefonleitung (8) auf das Videotex-Terminal (2) und die Umkehrung der Sende- und Empfangsgeschwindigkeiten des Videotex-Terminals (2) zu steuern, um eine Nachricht auf dem Drucker (14) unter Zwischenschaltung des Daten-Peripherieanschlusses (23') zur unmittelbaren Verbindung zwischen dem Fernkopierer und dem Videotex-Terminal (2) erfassen zu können.

## Claims

1. Facsimile machine comprising a modem (18), a processor (10), a transformer (19) means (20) for connection of a telephone line (8) to the modem (18) by means of the transformer (19), means (20, 22) for connection of the line (8) to a main telephone (7) and to a videotex terminal (2) provided with a peripheral computer connector (23), a peripheral computer connector (23'), connected to the processor (10), for direct connection to the peripheral computer connector (23) of the videotex terminal (2), means (25, 26) for connection of the line (8) to an answering machine (3), a ringing detector (21), a module (17) for recognising the nature of incoming calls at least by the frequencies of the signals received, and a printer (14), the facsimile machine being characterised in that it is arranged in order, in the case of a connection between the line (8) and the answering machine (3), to capture, by means of the modem (18) and the transformer (19), in parallel to the answering machine (3), events on the line and thus to recognise the nature thereof and, depending on the nature of the events, to direct the line (8) only to the facsimile machine or to the videotex terminal (2) or to the answering machine (3), and, in the case of a connection between the line (8) and the videotex terminal (2), to capture, by means of the peripheral computer connector (23), events on the line and thus to recognise the nature thereof and, depending on the nature of the events, to direct the line (8) only to the facsimile machine or to the videotex terminal (2).

2. Facsimile machine comprising a modem (18), a processor (10), a transformer (19), means (20) for connection of a telephone line (8) to the modem (18) by means of the transformer (19), means (20, 22) for connection of the line (8) to a main telephone (7), means (25, 26) for connection of the line (8) to an answering machine (3), a ringing detector (21), a module (17) for recognising the nature of incoming calls at least by the frequencies of the signals received, and a printer (14), the facsimile machine being characterised in that it is arranged in order, after an incoming call having caused the connection between the line (8) and the answering machine (3), to capture, by means of the modem (18) and the transformer (19), in parallel to the anwering machine (3), events on the line and thus to recognise the nature thereof and, depending on the nature or the events, to maintain the connection of the line (8) only to the facsimile machine or to the anwering machine (3).

3. Facsimile machine comprising a modem (18), a processor (10), a transformer (19), means (20) for connection of a telephone line (8) to the modem (18) by means of the transformer (19), means (20, 22) for connection of the line (8) to a main telephone (7) and to a videotex terminal (2) provided with a peripheral computer connector (23), a peripheral computer connector (23) connected to the processor (10), for direct connection to the peripheral computer connector (23) of the videotex terminal (2), a ringing detector (21), a module (17) for recognising the nature of incoming calls at least by the frequencies of the signals received, and a printer (14), the facsimile machine being characterised in that it is arranged in order, in the case of a connection between the line (8) and the videotex terminal (2), to capture, by means of the peripheral computer connector (23'), events on the line and thus to recognise the nature thereof and, depending on the nature of the events, to direct the line (8) only to the facsimile machine or to the videotex terminal (2).

4. Facsimile machine according to one of claims 1 to 3, wherein means (10) are provided, arranged to invert the rates of transmission and reception of the videotex terminal (2).

5. Facsimile machine according to one of claims 1 to 5, wherein the means for connection to the main telephone (7) comprise a first current detector (22) which is connected to the means (20) for connection of the modem (18) to the telephone line (8) and detects the line current in the main telephone (7).

6. Facsimile machine according to one of claims 1 to 5, arranged in order, when a secondary telephone (9) is connected in parallel to the telephone line (8), to progress, in the case of an incoming call and the receiver being lifted at the secondary telephone (9), in parallel intrusion, to listening to the signals of the secondary telephone (9) and to recognising the nature thereof.

7. Facsimile machine according to one of claims 1 and 2, wherein the said means for connection of the line (8) to the answering machine (3) comprise a switch (25), connected to the telephone line (8) upstream of the means (20) for connection of the modem (18) and of the main telephone (7) to the line (8), and a second current detector (26) detecting the line current in the answering machine (3).

8. Facsimile machine according to one of claims 1, 2 and 7, arranged in order, when the answering machine (3) comprises a recording-reading member (28), to be connected to the telephone line (8) in the case of an incoming call only after a number of rings greater than that at the end of which the member (28) is connected to the telephone line (8).

9. Facsimile machine according to one of claims 7 and 8, wherein the processor (10) is arranged to control the switch (25) so that this switch isolates the answering machine (3) from the telephone line (8).

10. Assembly comprising a facsimile machine according to one of claims 1, 2, 7, 8, 9, a main telephone (7) and an answering machine (3), the latter being connected to the telephone line (8), the facsimile machine comprising means (10, 20, 25) arranged to direct the telephone line (8) to the main telephone (7) and to isolate the answering machine (3).

11. Assembly comprising a facsimile machine according to claim 4, and a videotex terminal (2) connected to the facsimile machine, the latter being arranged in order, in the case of a connection between the modem (18) of the facsimile machine and the telephone line (8) and when there is silence on the telephone line, to control the directing of the telephone line (8) to the videotex terminal (2) and the inversion of the rates of transmission and reception of the videotex terminal (2) in order to be able to capture a message on the printer (14) by means of the peripheral computer connector (23') for direct connection between the facsimile machine and the videotex terminal (2).

12. Assembly according to claim 11, wherein the facsimile machine is arranged to supply a message to the videotex terminal (2) and to command it to transmit it on-line.

13. Facsimile machine according to one of claims 1 and 3, arranged to permit the capture and editing of text on the videotex terminal (2), and permit it to be converted into image elements and printed or transmitted as a facsimile.

14. Assembly comprising a facsimile machine, according to claim 4, a videotex terminal (2), connected to the facsimile machine, and an answering machine (3), the facsimile machine being arranged in order, in the case of connection between the answering machine (3) and the telephone line (8) and where there is silence on this line or the answering machine (3) is hung up, to control the directing of the telephone line (8) to the videotex terminal (2) and the inversion of the rates of transmission and reception of the videotex terminal (2) in order to be able to capture a message on the printer (14) by means of the peripheral computer connector (23') for direct connection between the facsimile machine and the videotex terminal (2).
